# EUROPÄISCHE PATENTANMELDUNG

(11) **EP 3 284 973 A1**
(43) Veröffentlichungstag der Anmeldung: **21.02.2018**
(21) Anmeldenummer: 16184862.7
(22) Anmeldetag: 19.08.2016
(51) Int. Cl.: F16H 57/08, F16H 1/46

(54) **GETRIEBE**

(71) Anmelder: Flender GmbH, 46395 Bocholt (DE)
(72) Erfinder: Klein-Hitpass, Arno, 52074 Aachen (DE)
(74) Vertreter: Maier, Daniel Oliver

(57) **Zusammenfassung**

Die Erfindung betrifft ein Getriebe mit mindestens einer Planetenstufe (100), die aus mindestens zwei parallelgeschalteten Planetengetrieben (110, 120) besteht. Die beiden parallelgeschalteten Planetengetriebe (110, 120) sind elastisch gekoppelt und die Steuerung des Leistungsflusses durch die parallelgeschalteten Planetengetriebe (110, 120) erfolgt durch eine Abstimmung von Torsionssteifigkeiten von Einzelkomponenten (1, 2, 5, 6, 7, 30, 40) der Planetengetriebe (110, 120).

## Beschreibung

Die vorliegende Erfindung betrifft ein Getriebe.

In großen Windkraftanlagen (= WKA), die vorzugsweise in Offshore-Anlagen zum Einsatz kommen, muss ein Getriebe im Antriebsstrang verlässlich sehr hohe Drehmomente übertragen können. Reicht bei hohen Drehmomenten der Zahneingriff eines Räderpaares nicht aus, kommt das Konzept der Leistungsverzweigung ins Spiel, bei dem die Drehmomentübertragung auf mehreren parallelen Pfaden durch das Getriebe erfolgt, so dass ein einzelner Übertragungspfad ein geringeres Drehmoment als das Gesamtdrehmoment übertragen muss.

Hans Joachim Förster, Automatische Fahrzeuggetriebe, Springer-Verlag Berlin Heidelberg, 1991, ISBN 978-3-642-84119-4, definiert in dem Kapitel "Leistungsverzweigung" auf den Seiten 171-199: "Leistungsverzweigung beschreibt Anlagen, bei denen die Leistung einer Eingangswelle auf mehrere Wellenstränge aufgeteilt wird. Bei Getrieben wird sie in der Regel auch wieder auf eine Ausgangswelle zurückgeführt." Es sind verschiedene Lösungen bekannt, wie ein Drehmoment auf mehrere parallele Pfade aufgeteilt wird.

Das Planetengetriebe, bei dem gleichzeitig mehrere Planetenräder mit einem Hohlrad und einem Sonnenrad kämmen, ist eine sehr gängige Form der Leistungsverzweigung.

Auch in WKA-Überlagerungsgetrieben, bei denen der Steg der Planetenräder mit dem Rotor, der Generator mit dem Sonnenrad und ein Asynchrongenerator, über den die Generatordrehzahl beeinflusst werden kann, mit dem Hohlrad verbunden ist, findet eine Leistungsverzweigung im Getriebe statt, siehe Caselitz, P., Krueger, T., Drehzahlvariable Windkraftanlagen mit Überlagerungsgetriebe, Windkraft-Journal 13 (1993), 3, S. 40-41, ISSN 0720-8073.

EP 2 431 632 A1 (Winergy AG) 21.03.2012 beschreibt ein leistungsverzweigendes WKA-Getriebe, bei dem das Drehmoment einer mit einer Rotornabe verbindbaren Eintriebswelle auf eine Vielzahl paralleler Stirnradstufen verzweigt und abtriebsseitig wieder auf zwei Abtriebswellen zusammengeführt wird, so dass die Rotorleistung zu gleichen Anteilen auf zwei Generatoren aufgeteilt werden kann.

EP 1 240 443 B1 (Lohmann & Stolterfoht GmbH) 18.09.2002 beschreibt ein WKA-Getriebe mit einer Planetenstufe, die aus mindestens zwei parallelgeschalteten leistungsverzweigenden Planetengetrieben besteht, denen eine lastausgleichende Differentialgetriebestufe in Form eines Ausgleichsplanetengetriebes nachgeschaltet ist.

Aufgabe der vorliegenden Erfindung ist es, eine verbesserte Leistungsverzweigung in einem Getriebe bereitzustellen.

Diese Aufgabe wird erfindungsgemäß durch ein Getriebe mit den in Anspruch 1 angegebenen Merkmalen gelöst.

Das erfindungsgemäße Getriebe weist mindestens eine Planetenstufe auf, die mindestens zwei parallelgeschaltete Planetengetriebe aufweist. Die beiden parallelgeschalteten Planetengetriebe sind elastisch gekoppelt. Die Steuerung des Leistungsflusses durch die parallelgeschalteten Planetengetriebe erfolgt durch eine Abstimmung von Torsionssteifigkeiten von Einzelkomponenten der Planetengetriebe. In diesem Sinne Einzelkomponenten der Planetengetriebe sind dabei primär Hohlwellen der Sonnenräder, flexible Planetenachsen, Elastische Kupplungen, Planetenträger, und sekundär Planetenräder und Hohlräder.

Jede Einzelkomponente, d.h. jedes Bauteil, hat eine spezifische Torsionssteifigkeit, bei einfachen Körpern wie Hohlzylindern kann man diese analytisch bestimmen. Letztendlich überlagern sich aber die Verformungen der Einzelkomponenten im Gesamtsystem, d.h. dem Planetengetriebe. Das Sonnenrad inklusive ihres Schafts ist das weichste Element im System, gefolgt vom Planetenträger; das am Getriebegehäuse fixierte Hohlrad zusammen mit dem Getriebegehäuse bilden das steifste Element.

Die Abstimmung der Steifigkeiten erfolgt vorzugsweise mittels einer numerischen Simulation, welche das Steifigkeitsverhalten des Gesamtsystems inklusive deren Kreuzeinflüssen ausreichend genau abbilden kann. Durch empirische numerische Modelle können einfache analytische Formeln abgeleitet werden, welche im "Alltag" die aufwändigen numerischen Berechnungen reduzieren.

Hinsichtlich der Lastaufteilung muss zwischen zwei Einflussgrößen unterschieden werden: Die primäre Grundsteifigkeit der Einzelkomponenten wird überlagert von sekundären Steifigkeitseinflussparametern, welche maßgeblich durch Fertigungsabweichungen bestimmt sind. Solange sich die primäre Grundsteifigkeit einer Einzelkomponente dominant zu den sekundären Steifigkeitseinflussparametern hinsichtlich der Lastaufteilung verhält ist die eingestellte Lastaufteilung über die gesamte Betriebszeit des Gesamtsystems stabil. Grundsätzlich kann eine beliebige Lastaufteilung eingestellt werden, die jeweiligen Verzahnungen müssen dementsprechend ausgelegt werden. Für den verbleibenden Fehler in der Lastaufteilung infolge der sekundären Steifigkeitsparameter sind entsprechende Sicherheitsfaktoren zu berücksichtigen.

Die Überprüfung der Lastverteilung im Betrieb erfolgt vorzugsweise über Dehnungsmessstreifen an einer geeigneten Einzelkomponente, d.h. einem geeigneten Bauteil, in beiden Lastpfaden. Abweichungen in der Lastverteilung können durch eine Steifigkeitsmodifikation einer oder mehrerer Einzelkomponenten durch mechanisches Abtragen von Material kompensiert werden.

Die Torsionssteifigkeit der Einzelkomponenten der Planetengetriebe kann z.B. durch Variation von Wandstärken, von axialen Längen, von Durchmessern und des Materials der Einzelkomponenten auf einen gewünschten Wert eingestellt werden.

In der erfindungsgemäßen Lösung sind zusätzliche Bauelemente oder Komponenten zur Einstellung einer Leistungsverzweigung in einem Getriebe entbehrlich; stattdessen werden die Torsionssteifigkeiten der bereits vorhandenen Bauelemente und Komponenten genutzt für eine ausreichende Steuerung des Leistungsflusses durch die parallelgeschalteten Planetengetriebe. Die vorliegende Erfindung schafft somit eine einfache Möglichkeit, mit den herkömmlichen Bauelementen erheblich höhere Drehmomenten als bisher durch ein Getriebe zu übertragen.

Vorteilhafte Ausgestaltungen und Weiterbildungen der Erfindung sind in den abhängigen Ansprüchen angegeben.

Gemäß einer bevorzugten Ausgestaltung der Erfindung weist die Planetenstufe einen Planetenträger mit mindestens einer darin fixierten Planetenachse auf, auf welcher mindestens zwei Planetenräder unabhängig voneinander drehbar gelagert sind, welche mit jeweils einem Hohlrad und jeweils einem Sonnenrad, welches drehfest auf einer korrespondierenden Sonnenradwelle angeordnet ist, kämmen. Von Vorteil ist dabei, dass der Aufbau eines herkömmlichen Planetengetriebes übernommen werden kann.

Gemäß einer bevorzugten Ausgestaltung der Erfindung sind die mindestens zwei zu den Sonnenrädern korrespondierenden Sonnenradwellen koaxial angeordnet. Von Vorteil ist dabei, dass die Drehmomente der beiden Lastpfade platzsparend und kompakt zur Abtriebswelle des Getriebes geführt werden können.

Gemäß einer bevorzugten Ausgestaltung der Erfindung sind die den mindestens zwei Planetenrädern zugeordneten Hohlräder starr miteinander verbunden sind, vorzugsweise einstückig ausgebildet. Von Vorteil ist dabei, dass der Aufbau eines herkömmlichen Planetengetriebes übernommen werden kann. Gemäß einer bevorzugten Ausgestaltung der Erfindung sind die mindestens zwei zu den Sonnenrädern korrespondierenden Sonnenradwellen elastisch miteinander gekoppelt, vorzugsweise mittels einer Kupplung. Von Vorteil ist dabei, dass die Torsionssteifigkeit der beiden parallelen Leistungspfade durch das Getriebe zusätzlich abgestimmt werden können.

Gemäß einer bevorzugten Ausgestaltung der Erfindung ist die mindestens eine Planetenachse achsenmittig, d.h. in einem mittleren Bereich ihrer Längserstreckung, in dem Planetenträger fixiert, wobei die mindestens zwei Planetenräder zu beiden Seiten der mittigen Fixierung auf der Planetenachse sitzen. Vorzugsweise ist die Planetenachse in drei Wangen des Planetenträgers gelagert, d.h. in jeweils einer Wange an den beiden Enden der Planetenachse und in einer Wange im mittleren Bereich der Planetenachse. Alternativ zu der dritten Wange kann die Planetenachse auch in einer sog. "bogie plate" gehalten werden, die z.B. mit dem Bezugszeichen 15 in Fig. 2 der US 20090170655 A1 (Hansen) 02.07.2009 dargestellt ist. Dann kann die Steuerung der Torsionssteifigkeit mittels der Planetenachse und der Sonnenwellen erfolgen. Von Vorteil ist dabei, dass Erfahrungen mit dem bekannten sog. bogie plate genutzt werden können, bei dem eine Planetenachse mittig von einem Planetenträger gehalten ist, wobei je ein Planetenrad zu beiden Seiten der Halterung auf der Planetenachse angeordnet ist.

Im Folgenden wird die Erfindung anhand mehrerer Ausführungsbeispiele unter Zuhilfenahme der beiliegenden Zeichnungen erläutert. Es zeigt jeweils schematisch im Längsschnitt und nicht maßstabsgetreu
- Fig. 1: eine erste Ausgestaltung eines Getriebes;
- Fig. 2: eine weitere Ausgestaltung eines Getriebes;
- Fig. 3: eine weitere Ausgestaltung eines Getriebes mit einem dreiwangigen Planetenträger;
- Fig. 4: eine weitere Ausgestaltung eines Getriebes mit einer Kupplung; und
- Fig. 5: eine weitere Ausgestaltung eines Getriebes.

Darin sind Lager wie Wälz- oder Gleitlager, wie im Maschinenbau allgemein üblich, als rechteckige Kästen mit einem diagonalen Kreuz dargestellt und mit dem Bezugszeichen 20 gekennzeichnet.

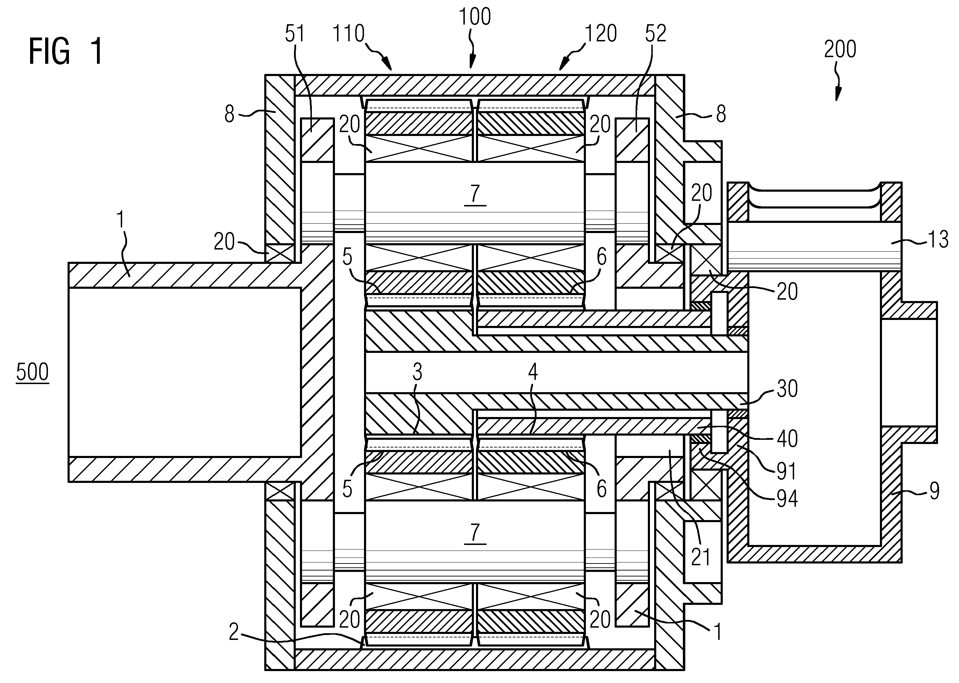

Fig. 1 zeigt einen Längsschnitt eines Getriebes mit einer ersten Planetenstufe 100 und einer der ersten Planetenstufe 100 nachgeschalteten zweiten Planetenstufe 200.

Das Getriebe weist einen antriebsseitigen Planetenträger 1 der ersten Planetenstufe 100 auf, der über seine antriebsseitige Hohlnabe mit einer hier nicht dargestellten Rotorwelle 500, welche drehfest mit einem Windrotor einer WKA verbunden ist, gekoppelt ist. Der zweiwangige Planetenträger 1 der ersten Planetenstufe 100 weist an seinen beiden Stirnseiten bzw. Wangen 51, 52 jeweils eine Hohlnabe auf, auf denen die Lager 20 zur Lagerung des Planetenträgers 1 im Gehäuse 8 angeordnet sind.

Die erste Planetenstufe 100 besteht aus zwei parallelgeschalteten und hintereinanderliegend angeordneten Planetengetrieben 110, 120, die eine Leistungsverzweigung bewirken. Zu diesem Zweck besitzen beide Planetengetriebe 110, 120 den gemeinsamen Planetenträger 1 der ersten Planetenstufe 100 mit gemeinsamen Planetenachsen 7 der ersten Planetenstufe 100. Die Planetengetriebe 110, 120 weisen jeweils ein Sonnenrad 3, 4 und in dem Planetenträger 1 drehbar gelagerte Planetenräder 5, 6 auf. Zur drehbaren Lagerung der Planetenräder 5, 6 der beiden Planetengetriebe 110, 120 sind im gemeinsamen Planetenträger 1 mehrere gemeinsame Planetenachsen 7 der ersten Planetenstufe 100 fixiert, auf denen Wälz- oder Gleitlager 20 montiert sind, welche wiederum die Planetenräder 5, 6 tragen.

Dabei kämmen die Planetenräder 5, 6 jeweils mit separaten Sonnenrädern 3, 4, aber einem gemeinsamen Hohlrad 2 der ersten Planetenstufe 100. Die separaten Sonnenräder 3, 4 sitzen jeweils drehfest auf koaxial drehbar gelagerten Sonnenrad-Hohlwellen 30, 40.

Die Sonnenrad-Hohlwellen 30, 40 sind zu einem Gehäusedurchlass 21 geführt, wo sie starr mit einem Planetenträger 9 einer zweiten Planetenstufe 200 verbunden sind, in welchem Planetenachsen 13 der zweiten Planetenstufe 200 fixiert sind. Dabei ist die dem ersten Sonnenrad 3 zugeordnete Sonnenrad-Hohlwelle 30 mit einer Wange 91 des Planetenträgers 9 der zweiten Planetenstufe 200 verbunden, während die dem zweiten Sonnenrad 4 zugeordnete Sonnenrad-Hohlwelle 40 mit einer Nabe 94 des Planetenträgers 9 der zweiten Planetenstufe 200 verbunden ist. Somit werden die Rotationsbewegungen der beiden Sonnenrad-Hohlwellen 30, 40 an dem Planetenträger 9 der zweiten Planetenstufe 200 zusammengeführt.

Die beiden parallelgeschalteten Planetengetriebe 110, 120 sind über das gemeinsame Hohlrad 2 und den gemeinsamen Planetenträger 9 der zweiten Planetenstufe 200 elastisch gekoppelt. Die Steuerung des Leistungsflusses durch die leistungsverzweigenden parallelgeschalteten Planetengetriebe 110, 120 erfolgt durch eine Abstimmung von Torsionssteifigkeiten der Einzelkomponenten der Planetengetriebe. Als Einzelkomponenten kommen dabei unter anderem in Frage: Primär: Hohlwellen 30, 40 der Sonnen, flexible Planetenachsen 7, Elastische Kupplungen, Planetenträger 9 einer nachgeschalteten Planetenstufe 200 und deren Planetenachse 13. Sekundär: Planeten 5, 6 und Hohlräder 2.

Durch eine geeignete Wahl der Torsionssteifigkeit dieser und ggf. anderer Komponenten kann die Leistungsverzweigung des am Eingang des Getriebes, d.h. an der antriebsseitigen Hohlnabe, anliegenden Drehmoments gesteuert werden.

Die Torsionssteifigkeit der Einzelkomponenten der Planetengetriebe kann z.B. durch Variation von Wandstärken, von axialen Längen, von Durchmessern und des Materials der Einzelkomponenten auf einen gewünschten Wert eingestellt werden.

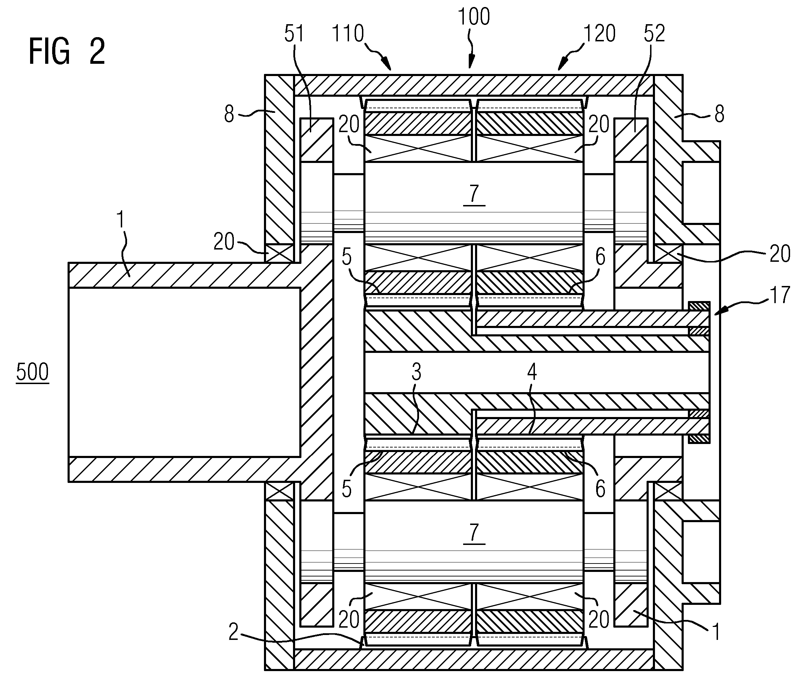

Fig. 2 zeigt einen Längsschnitt eines Getriebes mit einer ersten Planetenstufe 100, die im Wesentlichen gleich zu der ersten Planetenstufe des in Fig. 1 dargestellten Getriebes ausgebildet ist. Alle auch in Fig. 1 verwendeten Bezugszeichen bezeichnen hier analoge Bauteile. Der einzige wesentlichen Unterschied liegt darin, dass die Sonnenrad-Hohlwellen 30, 40 an der Schnittstelle 17 zu einer nachgeschalteten Komponente, z.B. einer zweiten Planetenstufe, unmittelbar miteinander verbunden sind, sei es starr, z.B. mittels einer Schweiß- oder Schraubverbindung, sei es formschlüssig, z.B. mittels einer Zahnkupplung, oder sei es elastisch, z.B. mittels einer Elastomerkupplung.

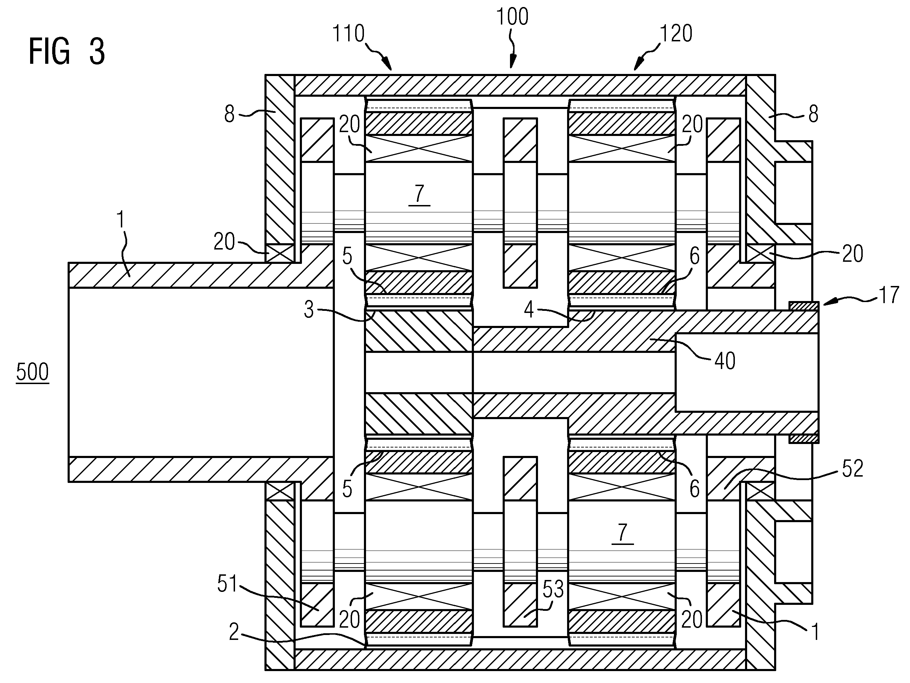

Fig. 3 zeigt einen Längsschnitt eines Getriebes mit einer ersten Planetenstufe 100. Alle auch in Fig. 1 und 2 verwendeten Bezugszeichen bezeichnen hier analoge Bauteile. Im Gegensatz zu dem in Fig. 1 dargestellten Planetenträger 1 der ersten Planetenstufe 100 weist der in Fig. 3 dargestellte Planetenträger 1 drei Wangen auf: an den beiden endseitigen Wangen 51, 52 sind, wie bei dem in Fig. 1 dargestellten Planetenträger, Hohlnaben angesetzt, die der Lagerung des Planetenträgers in dem Gehäuse 8 und der Fixierung der Planetenachse 7 dienen. Die dazwischen angeordnete, dritte Wange 53 dient der zusätzlichen radialen Abstützung der verlängerten Planetenachse 7. Durch die Verlängerung der Planetenachse 7 wirkt sich die Torsionssteifigkeit der Planetenachse 7 stärker aus: auf diese Weise kann mittels der Planetenachse 7 die Torsionssteifigkeit der beiden parallelen Leistungspfade durch das Getriebe besser gesteuert werden. Des Weiteren bietet diese Lösung eine verbesserte Einspannmöglichkeit der Planetenachsen.

Die Planetenachse 7 kann man anstatt durchgehend auch zweiteilig, d.h. in der mittleren Wange 53 geteilt, ausführen. In diesem Fall wirkt die Planetenachse 7 weniger aussteifend auf das Teilsystem Planetenträger 1/ Planetenachse 7 als in einer durchgehenden Ausführung.

Außerdem ist bei dem in Fig. 3 dargestellten Getriebe die erste Sonne 3 der ersten Planetenstufe 100 axial mit der zweiten Sonne 4 der ersten Planetenstufe 100 gekoppelt; auf diese Weise entfällt die dem ersten Sonnenrad 3 zugeordnete Sonnenrad-Hohlwelle 30 und allein die dem zweiten Sonnenrad 4 zugeordnete Sonnenrad-Hohlwelle 40 wird an die Schnittstelle 17 zu einer nachgeschalteten Komponente geführt.

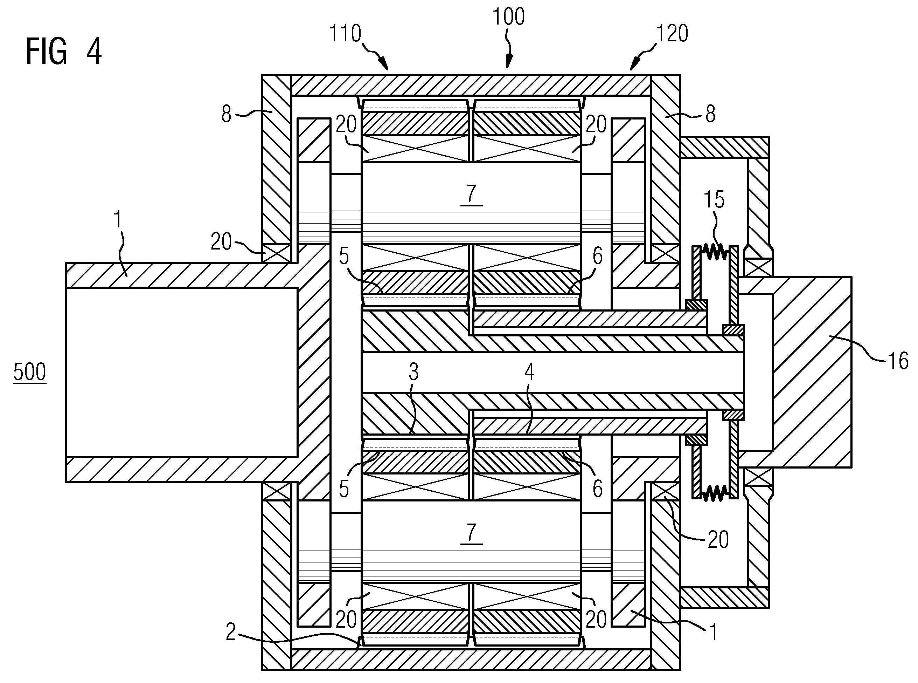

Fig. 4 zeigt einen Längsschnitt eines Getriebes mit einer ersten Planetenstufe 100, die im Wesentlichen gleich zu der ersten Planetenstufe des in Fig. 1 dargestellten Getriebes ausgebildet ist. Alle auch in Fig. 1 verwendeten Bezugszeichen bezeichnen hier analoge Bauteile. Der einzige wesentlichen Unterschied liegt darin, dass die Sonnenrad-Hohlwellen 30, 40 an ihrem abtriebsseitigen Ende mittels einer Kupplung 15 miteinander und mit einem der ersten Planetenstufe 100 nachgeschalteten Verbindungselement 16 gekoppelt sind. Durch die zusätzliche Kupplung 15 kann die Torsionssteifigkeit der beiden parallelen Leistungspfade durch das Getriebe zusätzlich abgestimmt werden.

Die Abstimmung kann durch numerische Simulation erfolgen: die Kupplung hat hier, genau wie die Sonne und der Planetenträger eine spezifische Steifigkeit, welche so zu wählen ist, dass sich die geforderte Lastverteilung einstellt. Die Abstimmung erfolgt in der Auslegungsphase vorzugsweise mittels numerischer Simulation. Die Überprüfung der Lastverteilung erfolgt vorzugsweise über Dehnungsmessungen an einer geeigneten Stelle in beiden Lastpfaden unter Last. Abweichungen in der Lastverteilung können durch eine Steifigkeitsmodifikation eines oder mehrerer Bauteile durch mechanisches Abtragen von Material ausgeglichen werden.

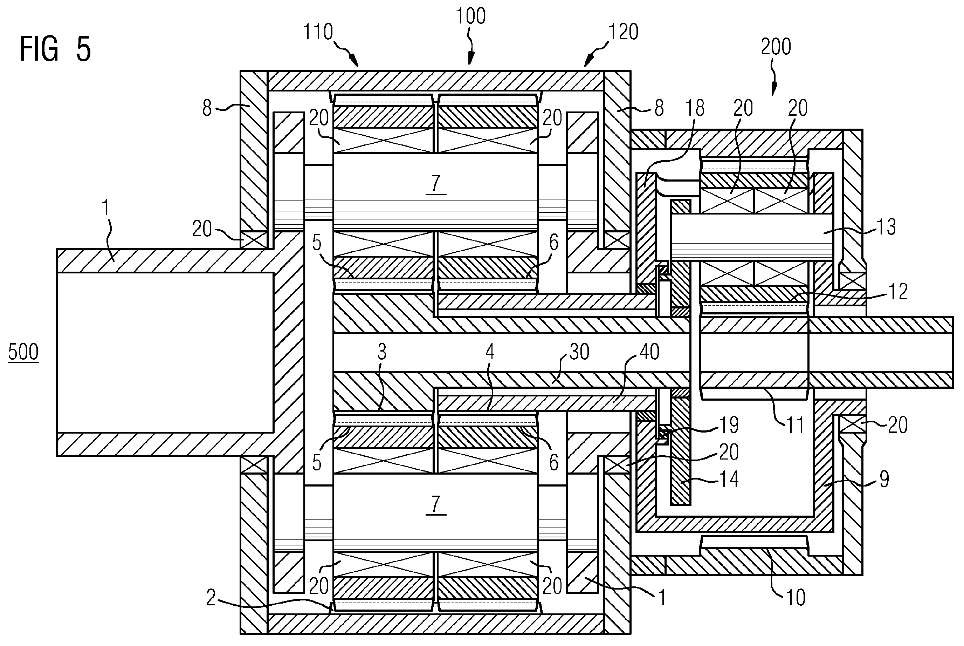

Fig. 5 zeigt einen Längsschnitt eines Getriebes mit einer ersten Planetenstufe 100 und einer zweiten Planetenstufe 200, die im Wesentlichen gleich zu den Planetenstufen des in Fig. 1 dargestellten Getriebes ausgebildet ist. Alle auch in Fig. 1 verwendeten Bezugszeichen bezeichnen hier analoge Bauteile.

Die Sonnenrad-Hohlwellen 30, 40 sind zu einem Gehäusedurchlass geführt, wo sie starr mit einem Planetenträger 9 einer zweiten Planetenstufe 200 verbunden sind, in welchem Planetenachsen 13 der zweiten Planetenstufe 200 fixiert sind, auf denen jeweils ein Planetenrad 12 der 2. Planetenstufe drehbar gelagert ist, welches mit einem Hohlrad 10 der 2. Planetenstufe und einem Sonnenrad 11 der 2. Planetenstufe kämmt. Eine dem Sonnenrad 11 zugeordnete Sonnenrad-Hohlwelle bildet den Abtrieb des Getriebes.

Ein wesentlicher Unterschied zu dem in Fig. 1 dargestellten Getriebe liegt darin, dass die dem ersten Sonnenrad 3 zugeordnete Sonnenrad-Hohlwelle 30 mit einer antriebsseitigen inneren Wange 14 des Planetenträgers der zweiten Planetenstufe und die dem zweiten Sonnenrad 4 zugeordnete Sonnenrad-Hohlwelle 40 mit einer antriebsseitigen äußeren Wange 18 des Planetenträgers der zweiten Planetenstufe gekoppelt ist. Die beiden antriebsseitigen Wangen 14, 18 des Planetenträgers der zweiten Planetenstufe sind mittels eines Schwenklagers 19 drehbar zueinander gelagert.

Durch die geteilte antriebsseitige Wange des Planetenträgers 9 der zweiten Planetenstufe 200 in eine innere Wange 14 und eine äußere Wange 18 kann eine Abstimmung der Torsionssteifigkeit des inneren Lastpfads mit der Hohlwelle 30 zusammen mit der inneren Planetenträgerwange 14 relativ zur Torsionssteifigkeit des äußeren Lastpfads mit der Hohlwelle 40 zusammen mit der äußeren Wange 18 erfolgen. Die Torsions-/ Verdrillsteifigkeiten der beteiligten Elemente 14, 18, 30 und 40 sind so zu wählen, dass die rechte und linke Einspannstelle der Planetenachse 13 in den Wangen des Planetenträgers 09 in tangentialer Richtung die gewünschte Auslenkung erfährt.

## Patentansprüche

1. Getriebe mit mindestens einer Planetenstufe (100), die mindestens zwei parallelgeschaltete Planetengetriebe (110, 120) aufweist,
**dadurch gekennzeichnet, dass** die beiden parallelgeschalteten Planetengetriebe (110, 120) elastisch gekoppelt sind und die Steuerung des Leistungsflusses durch die parallelgeschalteten Planetengetriebe (110, 120) durch eine Abstimmung von Torsionssteifigkeiten von Einzelkomponenten (1, 2, 5, 6, 7, 15, 16, 19, 30, 40) der Planetengetriebe (110, 120) erfolgt.

2. Getriebe nach Anspruch 1, wobei die Planetenstufe (100) einen Planetenträger (1) mit mindestens einer darin fixierten Planetenachse (7) aufweist, auf welcher mindestens zwei Planetenräder (5, 6) unabhängig voneinander drehbar gelagert sind, welche mit jeweils einem Hohlrad (2) und jeweils einem Sonnenrad (3, 4), welches drehfest auf einer korrespondierenden Sonnenradwelle (30, 40) angeordnet ist, kämmen.

3. Planetengetriebe nach Anspruch 2, wobei die mindestens zwei zu den Sonnenrädern (3, 4) korrespondierenden Sonnenradwellen (30, 40) koaxial angeordnet sind.

4. Planetengetriebe nach Anspruch 2 oder 3, wobei die den mindestens zwei Planetenrädern (5, 6) zugeordneten Hohlräder (2) starr miteinander verbunden sind, vorzugsweise einstückig ausgebildet sind.

5. Planetengetriebe nach einem der Ansprüche 2 bis 4, wobei die mindestens zwei zu den Sonnenrädern (3, 4) korrespondierenden Sonnenradwellen (30, 40) elastisch miteinander gekoppelt sind, vorzugsweise mittels einer Kupplung (15).

6. Planetengetriebe nach einem der Ansprüche 2 bis 5, wobei die mindestens eine Planetenachse (7) achsenmittig in dem Planetenträger fixiert ist, wobei die mindestens zwei Planetenräder (5, 6) zu beiden Seiten der mittigen Fixierung auf der Planetenachse (7) sitzen.
